# EUROPÄISCHE PATENTSCHRIFT

(11) **EP 3 337 673 B1**
(45) Veröffentlichungstag und Bekanntmachung des Hinweises auf die Patenterteilung: **29.07.2020**
(21) Anmeldenummer: 16759978.6
(22) Anmeldetag: 18.08.2016
(51) Int. Cl.: B42D 25/324, B42D 25/351, B42D 25/41, B42D 25/425, B42D 25/455, B42D 25/46

(54) **MEHRSCHICHTIGER DATENTRÄGER MIT FLÄCHIGEM DURCHSICHTSFENSTER**
MULTILAYER DATA STORAGE DEVICE HAVING A FLAT SEE-THROUGH WINDOW
SUPPORT DE DONNÉES MULTICOUCHE PRÉSENTANT UNE FENÊTRE DE VUE EN TRANSPARENCE ÉTENDUE

(30) Priorität: 21.08.2015 DE 102015010811
(43) Veröffentlichungstag der Anmeldung: 27.06.2018
(73) Patentinhaber: Veridos GmbH, 10969 Berlin (DE)
(72) Erfinder: ZINKE, Andreas, 82166 Gräfelfing (DE)
(74) Vertreter: Zeuner Summerer Stütz
(86) Internationale Anmeldenummer: PCT/EP2016/001408
(87) Internationale Veröffentlichungsnummer: WO 2017/032450

(56) Entgegenhaltungen:
- EP-A2- 0 219 011
- EP-A2- 0 219 012
- WO-A1-94/29119
- WO-A1-2011/061203
- WO-A1-2013/139749
- US-A- 6 135 503

## Beschreibung

Die Erfindung betrifft einen mehrschichtigen Datenträger mit einem flächigen Durchsichtsfenster sowie ein Verfahren zur Herstellung eines derartigen Datenträgers.

Datenträger, wie etwa Wert- oder Ausweisdokumente, werden zur Absicherung oft mit Sicherheitselementen versehen, die eine Überprüfung der Echtheit des Datenträgers gestatten und die zugleich als Schutz vor unerlaubter Reproduktion dienen. Dabei gewinnen zunehmend Durchsichtssicherheitsmerkmale, wie etwa Durchsichtsfenster in Identifikationskarten und anderen Ausweisdokumenten an Attraktivität.

Wie etwa in der Druckschrift EP 1 719 637 A2 beschrieben, wird bei der Herstellung von Identifikationskarten mit Durchsichtsfenstern in der Regel eine opake Kernschicht mit einer flächigen Aussparung in Form des gewünschten Fensters versehen und die ausgesparte Kernschicht mit zwei transparenten Deckfolien zusammenlaminiert. Bei der Lamination erweicht das Material der Deckfolien, fließt in die Aussparung der Kernschicht und erzeugt so idealerweise einen Kartenaufbau mit einer glatten Oberfläche und einem Durchsichtsfenster im Bereich der Aussparung. Es hat sich dabei jedoch herausgestellt, dass ab einer gewissen Fenstergröße oft Laminierflecken in der Mitte des Durchsichtsfensters auftreten, die das visuelle Erscheinungsbild des Fensters stark beeinträchtigten. Durch diese Laminierflecken ist die maximale Größe transparenter Fenster in der Praxis stark eingeschränkt.

Ferner offenbart WO 2011/061203 A1 eine mehrschichtige Anordnung zur Herstellung eines Wertdokuments, umfassend eine erste Schicht, die aus einer Kunststofffolie besteht, und eine zweite Schicht, die aus Papier oder einer weiteren Kunststofffolie besteht, wobei die Schichten zumindest in einem Überlappungsbereich übereinander angeordnet sind und zumindest einen Teilbereich des Überlappungsbereichs einen Verschweißbereich bildet, in welchem die erste und zweite Schicht derart miteinander verschweißt sind, dass der Verschweißbereich ein taktil und /oder optisch wahrnehmbares Erkennungs- oder Sicherheitsmerkmal des Wertdokuments bildet.

Ausgehend davon liegt der Erfindung die Aufgabe zugrunde, die Nachteile des Stands der Technik zu vermeiden und insbesondere einen Datenträger der eingangs genannten Art mit großflächigen Durchsichtsfenstern hoher optischer Qualität zu schaffen. Die Erfindung soll auch ein Verfahren zur Herstellung eines solchen Datenträgers bereitstellen.

Diese Aufgabe wird durch die Merkmale der unabhängigen Ansprüche gelöst. Weiterbildungen der Erfindung sind Gegenstand der abhängigen Ansprüche.

Ein mehrschichtiger Datenträger gemäß der Erfindung ist in Anspruch 1 definiert.

Wie weiter unten genauer erläutert, wird durch die Einprägung einer geeigneten Reliefstruktur in das Durchsichtsfenster bei der Lamination die Entstehung eines echten Materialverbunds aus den gegenüberliegenden Deckfolien im gesamten Flächenbereich des Durchsichtsfensters entscheidend gefördert und die Entstehung von Laminierflecken dadurch wirkungsvoll unterdrückt.

Das Durchsichtsfenster des Datenträgers ist vorteilhaft großflächig, insbesondere mit einer Fläche von mehr als 1 cm², vorzugsweise von mehr als 2 cm² und/oder mit einer kleinsten Abmessung von mehr als 0,5 cm, vorzugsweise von mehr als 1 cm ausgebildet.

Die geprägte Reliefstruktur stellt ein zusätzliches Sicherheitsmerkmal im Durchsichtsfenster des Datenträgers dar, das zur visuellen und/oder maschinellen Echtheitsprüfung eingesetzt werden kann. Insbesondere erzeugt die geprägte Reliefstruktur in dem Durchsichtsfenster ein latentes Bild, das bei Durchsichtbetrachtung durch Lichtbrechung in Erscheinung tritt. Im Auflicht ist das latente Bild des Durchsichtsfensters dagegen im Wesentlichen unsichtbar. Die geprägte Reliefstruktur bildet vorteilhaft ein Motiv, insbesondere ein geometrisches Muster, ein dreidimensionales Motiv oder eine Mikroschrift.

In einer vorteilhaften Weiterbildung der Erfindung enthält das Durchsichtsfenster weiter eine durch Einwirkung von Laserstrahlung erzeugte Kennzeichnung. Die geprägte Reliefstruktur und die lasererzeugte Kennzeichnung stehen dabei bevorzugt in einem Sinnzusammenhang, wobei vorgesehen ist, dass die geprägte Reliefstruktur und die lasererzeugte Kennzeichnung jeweils aufeinander bezogene oder einander ergänzende Informationen darstellen.

Der Datenträger stellt mit Vorteil eine Identifikationskarte, insbesondere eine Ausweiskarte, eine Datenseite für ein Ausweisdokument, eine Bankkarte, eine Kreditkarte oder einen Führerschein dar.

Ein Verfahren zum Herstellen eines mehrschichtigen Datenträgers mit einem flächigen Durchsichtsfenster gemäß der Erfindung ist in Anspruch 8 definiert.

Die übertragene Reliefstruktur erzeugt dabei ein latentes Bild in dem Durchsichtsfenster, das bei Durchsichtbetrachtung durch Lichtbrechung in Erscheinung tritt.

In einer Weiterbildung der Erfindung wird durch Einwirkung von Laserstrahlung eine Kennzeichnung in dem Durchsichtsfenster erzeugt. Die in dem Durchsichtsfenster erzeugte Reliefstruktur und die lasererzeugte Kennzeichnung werden dabei bevorzugt so ausgebildet, dass sie in einem Sinnzusammenhang stehen und aufeinander bezogene oder einander ergänzende Informationen darstellen.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch die Herstellung einer Datenseite mit einem Durchsichtsfenster nach einem Verfahren des Stands der Technik,
- Fig. 2: eine mit dem herkömmlichen Verfahren der Fig. 1 hergestellte Datenseite mit einem Laminierfleck in der Fenstermitte,
- Fig. 3: schematisch die Herstellung einer Datenseite mit einem Durchsichtsfenster nach einem erfindungsgemäßen Verfahren,
- Fig. 4: eine mit dem Verfahren der Fig. 3 hergestellte Datenseite nach einem Ausführungsbeispiel der Erfindung,
- Fig. 5: eine Datenseite mit gegenüberliegenden geprägten Reliefstrukturen im Durchsichtsfenster nach einem anderen Ausführungsbeispiel der Erfindung, und
- Fig. 6: eine Datenseite mit einer zusätzlichen lasererzeugte Kennzeichnung nach einem weiteren Ausführungsbeispiel der Erfindung.

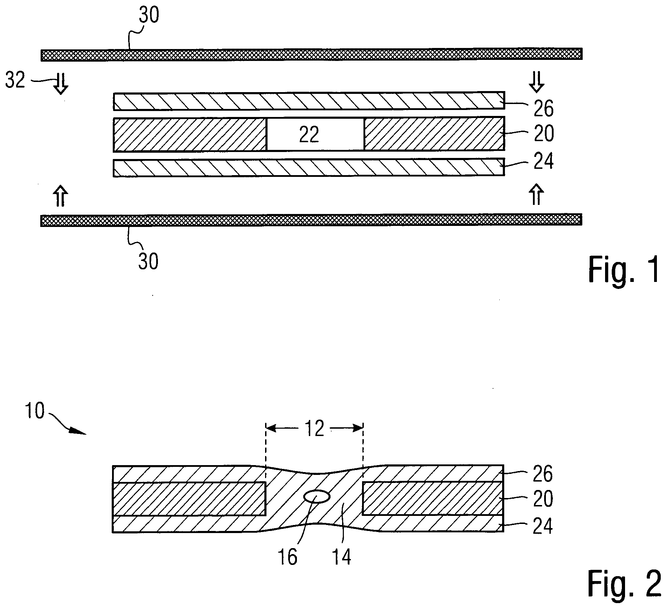

Die Erfindung wird nun am Beispiel von Karten mit Durchsichtsfenstern, beispielsweise einer Datenseite für einen Pass erläutert. Zum besseren Verständnis der Erfindung wird zunächst mit Bezug auf die Figuren 1 und 2 ein herkömmliches Verfahren zum Herstellen einer Datenseite 10 mit einem Durchsichtsfenster 12 und die dabei oft auftretenden Probleme geschildert.

Bei dem herkömmlichen Verfahren wird eine temperaturstabile opake Kernschicht 20 bereitgestellt und in einem Teilbereich mit einer flächigen Aussparung 22 in Form des gewünschten Durchsichtsfensters 12 versehen. Weiter werden zwei Deckfolien 24, 26 bereitgestellt, die zumindest im Bereich des späteren Durchsichtsfensters 12 transparent sind. Die erste Deckfolie 24, die Kernschicht 20 und die zweite Deckfolie 26 werden übereinandergelegt (Fig. 1 zeigt die Schichten der Deutlichkeit halber mit kleinem Abstand) und mit Hilfe zweier gegenüberliegender Laminierbleche 30 unter Druck- 32 und Temperatureinwirkung zusammenlaminiert.

Beim Laminieren erweicht das Material der Deckfolien 24, 26, fließt in die flächige Aussparung 22 der Kernschicht 20 und verfüllt diese, so dass ein Kartenaufbau mit einer glatten Oberfläche und einem Durchsichtsfenster 12 im Bereich der Aussparung 22 entsteht.

Es hat sich in der Praxis allerdings gezeigt, dass dieses Verfahren nur für kleine Durchsichtsfenster zufriedenstellende Ergebnisse liefert. Bei großflächigeren Durchsichtsfenstern werden dagegen gerade im Mittenbereich der Durchsichtsfenster oft störende Flecken beobachtet, die nach gegenwärtigem Verständnis auf eine unvollständige Lamination des im Fensterbereich 14 zusammenfließenden Deckfolienmaterials und den Einschluss von Luftblasen 16 im Fensterbereich zurückzuführen sind. Insbesondere im Mittenbereich großflächiger Fenster liegen die zusammenfließenden Materialien der Deckfolien nach diesem Verständnis dann nur aneinander und sind nicht miteinander verbunden.

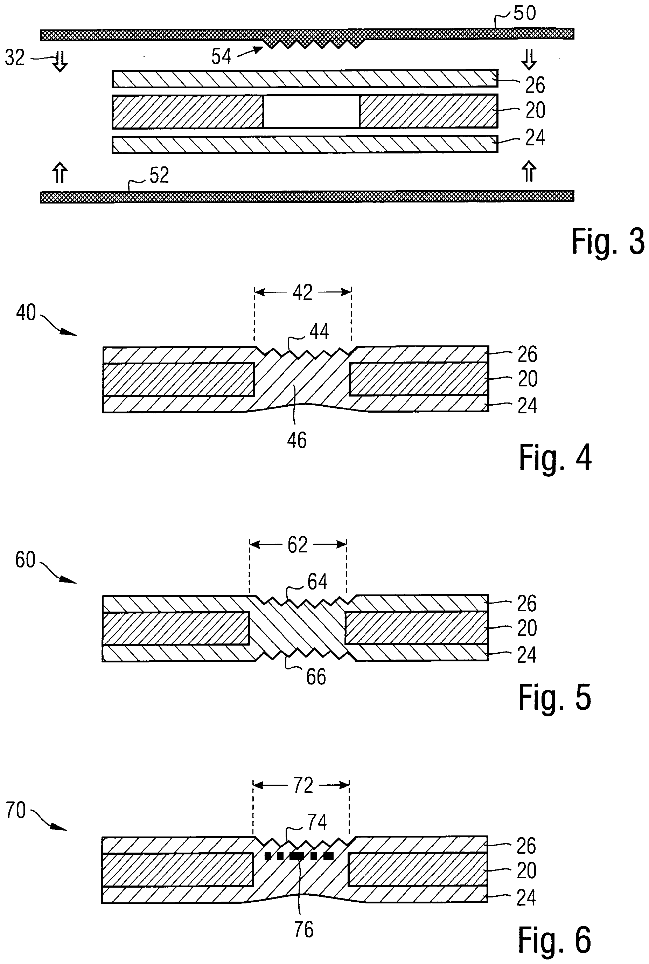

Wirksame Abhilfe schafft hier das mit Bezug auf die Figuren 3 und 4 beschriebene erfindungsgemäße Verfahren zum Herstellen einer Datenseite 40 mit einem Durchsichtsfenster 42.

Bei dem erfindungsgemäßen Verfahren wird eine temperaturstabile opake Kernschicht 20 bereitgestellt und in einem Teilbereich mit einer flächigen Aussparung 22 in Form des gewünschten Durchsichtsfensters 42 versehen. Die Aussparung 22 kann hierzu beispielsweise aus der Kernschicht ausgestanzt werden. Da durch die erfindungsgemäße Vorgehensweise keine störenden Laminierflecken auftreten, wie weiter unten erläutert, kann die Fläche der Aussparung 22 praktisch beliebig, insbesondere auch großflächig gewählt werden.

Neben der Kernschicht 20 werden zwei Deckfolien 24, 26 bereitgestellt, die zumindest im Bereich des späteren Durchsichtsfensters 42 transparent sind. Die erste Deckfolie 24, die Kernschicht 20 und die zweite Deckfolie 26 werden übereinandergelegt (Fig. 3 zeigt die Schichten der Deutlichkeit halber mit kleinem Abstand) und mit Hilfe zweier gegenüberliegender Laminierbleche 50, 52 unter Druck- 32 und Temperatureinfluss zusammenlaminiert. Dabei ist zumindest eines der Laminierbleche 50 im Bereich des zu erzeugenden Durchsichtsfensters 42 auf der den zu laminierenden Schichten zugewandten Seite mit einer Reliefstruktur 54 versehen, die sich zumindest in Teilbereichen über das Höhenniveau der außerhalb der Reliefstruktur 54 liegenden Fläche des Laminierblechs 50 erhebt. Die Begriffe Erhebung und Vertiefung beziehen sich dabei unabhängig von der Orientierung des Laminierblechs im Raum auf die den zu laminierenden Schichten zugewandte Oberfläche des Laminierblechs 50. Eine von der Oberfläche vorspringende Struktur wird als Erhebung bezeichnet, eine zurückspringende Struktur als Vertiefung. Die Reliefstruktur 54 kann sowohl Erhebungen als auch Vertiefungen aufweisen, wichtig ist nur, dass zumindest in einem Teilbereich der Reliefstruktur 54 Erhebungen, also vorspringende Strukturen vorliegen.

Die Erhebungen und gegebenenfalls auch Vertiefungen der Reliefstruktur sind dabei in Form eines gewünschten Motivs, im Ausführungsbeispiel etwa in Form einer Mikroschrift angeordnet.

Beim Laminieren bewirkt die Reliefstruktur 54 des Laminierblechs 50 nun zweierlei. Zum einen erzeugen die Erhebungen der Reliefstruktur 54 beim Laminieren einen zusätzlichen Anpressdruck im Inneren der flächigen Aussparung 22 der Kernschicht 20. Beim Zusammenfließen des erweichten Deckfolienmaterials unterstützt dieser zusätzliche Anpressdruck die Verbindung der Materialien insbesondere in der Mitte des Fensterbereichs 46 entscheidend und verhindert so auch bei großflächigen Fenstern wirkungsvoll den Einschluss von Luftblasen und damit die Entstehung störender Laminierflecken.

Zum anderen wird die Reliefstruktur 54 beim Laminieren in negativer Form in die angrenzende Deckfolie 26 übertragen, so dass dort eine geprägte Reliefstruktur 44 entsteht, die im Ausführungsbeispiel etwa eine Mikroschrift bildet. Auf diese Weise entsteht im Durchsichtsfenster 42 ein zusätzliches Sicherheitsmerkmal, das die Fälschungssicherheit der Datenseite 40 weiter erhöht.

Die eingeprägte Reliefstruktur 44 bildet im Durchsichtsfenster 42 ein latentes Bild, das ähnlich einem Wasserzeichen in Aufsicht praktisch unsichtbar ist und erst bei Betrachtung in Durchsicht durch Lichtbrechung in Erscheinung tritt.

Figur 5 zeigt als weiteres Ausführungsbeispiel eine Datenseite 60 mit einem Durchsichtsfenster 62. Bei der Herstellung der Datenseite 60 wurden in dem Laminierschritt auf beiden Seiten Laminierbleche mit einer zumindest bereichsweise erhabenen Reliefstruktur eingesetzt, so dass das Durchsichtsfenster 62 auf beiden Seiten jeweils mit einer geprägten Reliefstruktur 64, 66 versehen wurde. Die gegenüberliegenden Reliefstrukturen 64, 66 können identisch oder unterschiedlich sein und sich beispielsweise in Durchsicht aus einem bestimmten Betrachtungswinkel zu einem Gesamtmotiv ergänzen. Da die Bilder der Reliefstrukturen 64, 66 in unterschiedlichen Ebenen entstehen, kann auch ein besonders starker dreidimensionaler Eindruck erzeugt werden. Im Fall identischen Reliefstrukturen 64, 66 kann die Deckungsgleichheit der Reliefstrukturmotive aus einer bestimmten Betrachtungsrichtung in Durchsicht als weiteres Echtheitsmerkmal genutzt werden.

Die geprägte Reliefstruktur des Durchsichtsfensters kann mit weiteren Echtheitsmerkmalen, wie etwa einer Laserpersonalisierung kombiniert sein.

Das Ausführungsbeispiel der Fig. 6 zeigt hierzu eine Datenseite 70 eines Passes mit einem Durchsichtsfenster 72, in das in der oben beschriebenen Art beim Laminieren eine Reliefstruktur 74 eingeprägt wurde. Zusätzlich enthält das Durchsichtsfenster 72 eine Kennzeichnung 76, die durch Einwirkung von Laserstrahlung in das im Fensterbereich zusammengeflossene Material der Deckfolien eingeschrieben wurde. Die Kennzeichnung 76 zeigt mit Vorteil personenbezogene Daten und stellt beispielsweise ein Foto des Passinhabers dar.

Die lasererzeugte Kennzeichnung 76 und die geprägte Reliefstruktur 74 können so aufeinander abgestimmt sein, dass sie bei der Betrachtung im Durchlicht in Kombination ein bestimmtes Muster erzeugen, das visuell oder maschinell geprüft werden kann. Wegen der unterschiedlichen Herstellungswege sind solche aufeinander bezogene oder einander ergänzende Sicherheitselemente unterschiedlichen Typs nur sehr schwer nachzuahmen. Die geprägte Reliefstruktur 74 erzeugt auf diese Weise eine zusätzliche Absicherung der lasererzeugten Kennzeichnung 76 des Durchsichtsfensters 72.

### Bezugszeichenliste

- 10: Datenseite
- 12: Durchsichtsfenster
- 14: Fensterbereich
- 16: Luftblasen
- 20: opake Kernschicht
- 22: flächige Aussparung
- 24,26: Deckfolien
- 30: Laminierbleche
- 32: Druckeinwirkung
- 40: Datenseite
- 44: eingeprägte Reliefstruktur
- 42: Durchsichtsfenster
- 46: Fensterbereich
- 50,52: Laminierbleche
- 54: Reliefstruktur
- 60: Datenseite
- 62: Durchsichtsfenster
- 64, 66: Reliefstrukturen
- 70: Datenseite
- 72: Durchsichtsfenster
- 74: Reliefstruktur
- 76: lasererzeugte Kennzeichnung

## Patentansprüche

1. Mehrschichtiger Datenträger mit einem flächigen Durchsichtsfenster (42, 62, 72), mit
- einer opaken Kernschicht (20), die zur Bildung des Durchsichtsfensters in einem Teilbereich mit einer flächigen Aussparung (22) versehen ist, und
- zwei zumindest im Bereich des Durchsichtsfensters transparente Deckfolien (24, 26), die auf gegenüberliegende Seiten der opaken Kernschicht (20) auflaminiert sind, wobei
- die beiden Deckfolien (24, 26) über die gesamte Fläche des Durchsichtsfensters (42, 62, 72) durch Zusammenlaminieren mit Hilfe gegenüberliegender Laminierbleche (50, 52) miteinander verbunden sind,
- die miteinander verbunden Deckfolien (24, 26) im Durchsichtsfenster mit einer geprägten Reliefstruktur (44, 64, 66, 74) versehen sind, die durch eine zumindest bereichsweise erhabene Reliefstruktur (54) in zumindest einem der genannten Laminierbleche (50, 52) erzeugt ist, und wobei
- die geprägte Reliefstruktur (44, 64, 66, 74) ein latentes Bild in dem Durchsichtsfenster (42, 62, 72) erzeugt, das bei Durchsichtbetrachtung durch Lichtbrechung in Erscheinung tritt und das im Auflicht im Wesentlichen unsichtbar ist.

2. Datenträger nach Anspruch 1, **dadurch gekennzeichnet, dass** das Durchsichtsfenster großflächig, insbesondere mit einer Fläche von mehr als 1 cm², vorzugsweise von mehr als 2 cm² ausgebildet ist.

3. Datenträger nach Anspruch 1 oder 2, **dadurch gekennzeichnet, dass** das Durchsichtsfenster mit einer kleinsten Abmessung von mehr als 0,5 cm, vorzugsweise von mehr als 1 cm ausgebildet ist.

4. Datenträger nach wenigstens einem der Ansprüche 1 bis 3, **dadurch gekennzeichnet, dass** die geprägte Reliefstruktur ein Motiv, insbesondere ein geometrisches Muster, ein dreidimensionales Motiv oder eine Mikroschrift bildet.

5. Datenträger nach wenigstens einem der Ansprüche 1 bis 4, **dadurch gekennzeichnet, dass** das Durchsichtsfenster weiter eine durch Einwirkung von Laserstrahlung erzeugte Kennzeichnung enthält.

6. Datenträger nach Anspruch 5, **dadurch gekennzeichnet, dass** die geprägte Reliefstruktur und die lasererzeugte Kennzeichnung in einem Sinnzusammenhang stehen, nämlich dass die geprägte Reliefstruktur und die lasererzeugte Kennzeichnung jeweils aufeinander bezogene oder einander ergänzende Informationen darstellen.

7. Datenträger nach wenigstens einem der Ansprüche 1 bis 6, **dadurch gekennzeichnet, dass** der Datenträger eine Identifikationskarte, insbesondere eine Ausweiskarte, eine Datenseite für ein Ausweisdokument, eine Banckarte, eine Kreditkarte oder ein Führerschein ist.

8. Verfahren zum Herstellen eines mehrschichtigen Datenträgers mit einem flächigen Durchsichtsfenster (42, 62, 72), bei dem
- eine opake Kernschicht (20) bereitgestellt und zur Bildung des Durchsichtsfensters in einem Teilbereich mit einer flächigen Aussparung (22) versehen wird,
- zwei zumindest im Bereich des zu erzeugenden Durchsichtsfensters transparente Deckfolien bereitgestellt (24, 26) werden, und
- eine Schichtenfolge aus erster Deckfolie, opaker Kernschicht und zweiter Deckfolie mit Hilfe gegenüberliegender Laminierbleche (50, 52) zusammenlaminiert wird, so dass die flächige Aussparung der Kernschicht zusammen mit den transparenten Bereichen der Deckfolien das Durchsichtsfenster (42, 62, 72), bildet,
wobei
- zumindest eines der Laminierbleche (50, 52) im Bereich des Durchsichtsfensters (42, 62, 72) eine zumindest bereichsweise erhabene Reliefstruktur (54) aufweist, deren Form beim Laminieren in negativer Form in die angrenzende Deckfolie übertragen wird, und deren Erhebungen beim Laminieren einen zusätzlichen Anpressdruck im Inneren der flächigen Aussparung (22) der Kernschicht (20) erzeugen, und wobei
- die übertragene Reliefstruktur (44, 64, 66, 74) ein latentes Bild in dem Durchsichtsfenster (42, 62, 72) erzeugt, das bei Durchsichtbetrachtung durch Lichtbrechung in Erscheinung tritt und das im Auflicht im Wesentlichen unsichtbar ist.

9. Verfahren nach Anspruch 8 **dadurch gekennzeichnet, dass** durch Einwirkung von Laserstrahlung eine Kennzeichnung in dem Durchsichtsfenster erzeugt wird.

## Claims

1. A multilayer data carrier having an areal see-through window (42, 62, 72), having
- an opaque core layer (20) that is furnished in a sub-region with an areal gap (22) to form the see-through window, and
- two cover foils (24, 26) that are transparent at least in the region of the see-through window and that are laminated onto opposing sides of the opaque core layer (20),
- the two cover foils (24, 26) being joined with each other across the entire area of the see-through window (42, 62, 72) by laminating them together with the aid of opposing lamination plates (50, 52),
- the cover foils (24, 26) that are joined with each other being furnished in the see-through window with an embossed relief structure (44, 64, 66, 74) that is produced by a relief structure (54) that is elevated in at least some regions in at least one of the said lamination plates (50, 52), and
- the embossed relief structure (44, 64, 66, 74) producing in the see-through window (42, 62, 72) a latent image that, due to light diffraction, comes into view when looked through and that is substantially not visible in reflected light.

2. The data carrier according to claim 1, **characterized in that** the see-through window is developed to have a large area, especially having an area of more than 1 cm², preferably of more than 2 cm².

3. The data carrier according to claim 1 or 2, **characterized in that** the see-through window is developed to have a smallest dimension of more than 0.5 cm, preferably of more than 1 cm.

4. The data carrier according to at least one of claims 1 to 3, **characterized in that** the embossed relief structure forms a motif, especially a geometric pattern, a three-dimensional motif or a microtext.

5. The data carrier according to at least one of claims 1 to 4, **characterized in that** the see-through window further includes a marking produced by the action of laser radiation.

6. The data carrier according to claim 5, **characterized in that** the embossed relief structure and the laser-produced marking are associated in meaning, namely **in that** the embossed relief structure and the laser-produced marking each constitute pieces of information that are related to or that complement each other.

7. The data carrier according to at least one of claims 1 to 6, **characterized in that** the data carrier is an identification card, especially an identity card, a data page for an identification document, a bank card, a credit card or a driver's license.

8. A method for manufacturing a multilayer data carrier having an areal see-through window (42, 62, 72), in which
- an opaque core layer (20) is provided and, to form the see-through window, is furnished in a sub-region with an areal gap,
- two cover foils (24, 26) are provided that are transparent at least in the region of the see-through window to be produced, and
- a layer sequence composed of first cover foil, opaque core layer and second cover foil are laminated together with the aid of opposing lamination plates (50, 52) such that the areal gap in the core layer, together with the transparent regions of the cover foils, forms the see-through window (42, 62, 72),
- at least one of the lamination plates (50, 52) comprising, in the region of the see-through window (42, 62, 72), a relief structure (54) that is elevated in at least some regions, and whose form, upon lamination, is transferred in the inverse form to the adjacent cover foil, and whose elevations, upon lamination, produce an additional contact pressure in the interior of the areal gap (22) in the core layer (20), and
- the transferred relief structure (44, 64, 66, 74) producing in the see-through window (42, 62, 72) a latent image that, due to light diffraction, comes into view when looked through and that is substantially non-visible in reflected light.

9. The method according to claim 8, **characterized in that** a marking is produced in the see-through window by the action of laser radiation.

## Revendications

1. Support de données multicouches, pourvu d'une fenêtre de vue (42, 62, 72) transparente étendue, pourvu
- d'une couche centrale (20) opaque, qui est munie dans une zone partielle d'une encoche (22) étendue pour former la fenêtre de vue transparente et
- de deux films de couverture (24, 26), transparents au moins dans la zone de la fenêtre de vue transparente, qui sont laminés sur deux côtés opposés de la couche centrale (20) opaque,
- les deux films de couverture (24, 26) étant assemblés l'un à l'autre sur l'ensemble de la surface de la fenêtre de vue transparente (42, 62, 72) en étant laminés l'un à l'autre à l'aide de tôles de laminage (50, 52) opposées,
- les films de couverture (24, 26) assemblés l'un à l'autre étant munis d'une structure en relief (44, 64, 66, 74) gaufrée, qui est créée par une structure en relief (54) surélevée au moins par endroits dans au moins l'une des tôles de laminage (50, 52), et
- la structure en relief (44, 64, 66, 74) gaufrée créant une image latente dans la fenêtre de vue transparente (42, 62, 72), qui lors d'une observation en transparence apparaît par réfraction et qui est sensiblement invisible sous une lumière incidente.

2. Support de données selon la revendication 1, **caractérisé en ce que** la fenêtre de vue transparente est conçue à grande surface, notamment sur une surface de plus de 1 cm², de préférence de plus de 2 cm².

3. Support de données selon la revendication 1 ou 2, **caractérisé en ce que** la fenêtre de vue transparente est conçue avec une dimension la plus petite de plus de 0,5 cm, de préférence de plus de 1 cm.

4. Support de données selon au moins l'une quelconque des revendications 1 à 3, **caractérisée en ce que** la structure en relief gaufrée forme un motif, notamment un modèle géométrique, un motif tridimensionnel ou une micro-écriture.

5. Support de données selon au moins l'une quelconque des revendications 1 à 4, **caractérisé en ce que** la fenêtre de vue transparente comprend par ailleurs un marquage créé par l'effet d'un rayonnement laser.

6. Support de données selon la revendication 5, **caractérisé en ce que** la structure en relief gaufrée et le marquage créé par laser sont en rapport thématique, à savoir que la structure en relief gaufrée et le marquage créé au laser représentent respectivement des informations rapportées les unes aux autres ou se complémentant mutuellement.

7. Support de données selon au moins l'une quelconque des revendications 1 à 6, **caractérisée en ce que** le support de données est une carte d'identification, notamment une carte d'identité, un côté de données pour un document d'identité, une carte bancaire, une carte de crédit ou un permis de conduire.

8. Procédé, destiné à fabriquer un support de données multicouches pourvu d'une fenêtre de vue (42, 62, 72) transparente étendue, lors duquel
- on met à disposition une couche centrale (20) opaque, et pour créer la fenêtre transparente, on la munit dans une zone partielle d'une encoche (22) étendue,
- on met à disposition deux films de couverture (24, 26), transparents au moins dans la zone de la fenêtre de vue transparente qui doit être créée, et
- on lamine ensemble une suite de couches comprenant le premier film de couverture, la couche centrale opaque et le deuxième film de couverture à l'aide de tôles de laminage (50, 52) opposées, de sorte que, conjointement avec les zones transparentes des films de couverture, l'encoche étendue de la couche centrale forme la fenêtre de vue (42, 62, 72) transparente,
- au moins l'une des tôles de laminage (50, 52) comportant dans la zone de la fenêtre de vue transparente (42, 62, 72) une structure en relief (54) surélevée au moins par endroits, dont la forme est transférée sous forme négative dans le film de couverture adjacent, lors du laminage et dont les surélévations créent une pression d'appui supplémentaire à l'intérieur de l'encoche étendue (22) de la couche centrale (20), lors du laminage, et
- la structure en relief (44, 64, 66, 74) transférée créant une image latente dans la fenêtre de vue (42, 62, 72) transparente, qui lors d'une observation en transparence apparaît par réfraction et qui est sensiblement invisible sous une lumière incidente.

9. Procédé selon la revendication 8, **caractérisé en ce que** sous l'effet d'un rayonnement laser, on créé un marquage dans la fenêtre de vue transparente.
